# EUROPEAN PATENT APPLICATION

(11) **EP 4 206 246 A1**
(43) Date of publication of application: **05.07.2023**
(21) Application number: 21218480.8
(22) Date of filing: 31.12.2021
(51) Int. Cl.: C08F 255/02

(54) **POLYOLEFIN BASED COUPLING AGENT OBTAINED FROM MALEIC ACID DERIVATIVES AND THE PRODUCTION METHOD OF THE COUPLING AGENT**

(71) Applicant: Petkim Petrokimya Holding A.S., Aliaga-Izmir (TR)
(72) Inventor: ACAR, Ali Ersin, 34342 Bebek Istanbul (TR); YESIL GUR, Isil, 34342 Bebek Istanbul (TR); EZDESIR, Ayhan, Izmir (TR); ALPARSLAN, Alp, Izmir (TR); BATI, Bige, Izmir (TR)
(74) Representative: Sevinç, Cenk

(57) **Abstract**

The present invention relates to a polyolefin-based coupling agent obtained by means of grafting maleic anhydride monoester or maleic anhydride monoamide, obtained from maleic anhydride to atactic propylene by melt mixing, and a method for producing the polyolefin-based coupling agent. By means of the present invention, maleic anhydride monoester or maleic anhydride monoamide synthesized from maleic anhydride is grafted onto atactic polypropylene, which is a polyolefin derivative, without sublimating in the melt phase, and said material can be used as a compatibilizing agent in emulsions, compounding, masterbatching (plastic raw material additive), and in composite production industries.

## Description

### Technical Field of the Invention

The present invention relates to a polyolefin-based coupling agent obtained by means of grafting maleic anhydride monoester or maleic anhydride monoamide, obtained from maleic anhydride to atactic propylene by melt mixing, and a method for producing the polyolefin-based coupling agent. By means of the present invention, maleic anhydride monoester or maleic anhydride monoamide synthesized from maleic anhydride is grafted onto atactic polypropylene, which is a polyolefin derivative, without sublimating in the melt phase, and said material can be used as a compatibilizing agent in emulsions, compounding, masterbatching (plastic raw material additive), and in composite production industries.

### State of the Art

Atactic polypropylene, which is generally produced as a side product in the industry, is being evaluated as a potential raw material that may generate some income instead of being categorized as waste with the increase of awareness in recycling. Therefore, when atactic polypropylene is modified with different chemicals, it is clear that there are improvements in its physical and chemical properties. Atactic polypropylenes are mostly used as coupling agents, and compatibilizers in nanocomposites. Coupling agents usually provide chemical coupling of different materials to each other even under extreme environment conditions. However, some additional benefits such as controlling the moisture content can be achieved by means of adding a coupling agent to the composites.

Although it is stated that atactic polypropylene is among the most preferred polymers due to its wide application area and low cost, it has limitations such as lack or very limited reactivity its of reactive parts, that atactic polypropylene is hydrophilic and has a low melting temperature compared to isotactic polypropylene, and that atactic polypropylene is sensitive to photo-oxidation. Thus, in order to overcome such limitations, atactic polypropylenes are modified. It is known that polyolefins with functional (polyolefins grafted with maleic anhydride / glycidyl methacrylate or other monomers) act as coupling agents or binding agents when fiillers or incompatible polymers are mixed together.

Maleic anhydride is mostly used in the functionalization of polyolefins due to its high reactivity. There are studies in which maleic anhydride is grafted onto atactic polypropylene in order to provide the desired functions to atactic polypropylene. However, grafting efficiencies are low due to the facts that maleic anhydride, which is used in the synthesis of polyolefin-based coupling agent, has a sublimation problem in melt conditions, and that does not mix homogeneously with the polymer.

In the state of the art, it is clear that in the synthesis of polyolefin-based coupling agents obtained by the modification of atactic polypropylene with maleic anhydride cannot be attained with the desired functionality, even if atactic polypropylenes are modified with maleic anhydride. In addition, the sublimation problem of maleic anhydride is encountered during the grafting processes in the current studies due to the fact that maleic anhydride has a low melting temperature and high boiling temperature. In addition, it is obvious that a phase separation problem experienced as a result of the use of maleic anhydride also reduces the grafting efficiencies in the studies that were carried out so far, and there is also no present study for reducing the amount of solvent consumed during the synthesis of coupling agents.

It is necessitated to develop a polyolefin based coupling agent obtained by grafting maleic anhydride monoester or maleic anhydride monoamide obtained from maleic anhydride to the atactic propylene by melt mixing, and a production method of the polyolefin based coupling agent due to the facts such as the limitations and inadequacies of the available solutions in the state of the art, the melt sublimation problem during grafting efficiency of maleic anhydride to atactic polypropylene in order to obtain a coupling agent, that maleic anhydride does not mix sufficiently with atactic polypropylene, that it has a low grafting rate to atactic polypropylene as a result of the sublimation of maleic anhydride and not mixing sufficiently with atactic polypropylene, that the insufficiency of the functional groups bounded atactic polypropylene makes the grafting process difficult in grafting studies conducted with maleic anhydride, the excessive use of solvents that are harmful to the environment and human health during the grafting of maleic anhydride to atactic polypropylene in the state of the art, and as a result of using the solvents, the need for additional steps in order to remove the solvent used.

### Brief Description and Objects of the Invention

The present invention relates to a polyolefin-based coupling agent obtained by means of grafting maleic anhydride monoester or maleic anhydride monoamide, obtained from maleic anhydride to atactic propylene by melt mixing, and a method for producing the polyolefin-based coupling agent. By means of the present invention, maleic anhydride monoester or maleic anhydride monoamide synthesized from maleic anhydride is grafted onto atactic polypropylene, which is a polyolefin derivative, without sublimating in the melt phase, and said material can be used as a compatibilizing agent in emulsions, compounding, masterbatching (plastic raw material additive), and in composite production industries.

An object of the present invention is to prevent the melt sublimation problem during the grafting of maleic anhydride to atactic polypropylene in order to obtain a coupling agent. In the present invention, the problem of melt sublimination is eliminated by means of the modification of maleic anhydride. Maleic anhydride monoester or maleic anhydride monoamide is obtained after maleic anhydride is modified with chemicals having different branching, functional groups, and polarities (long chain alcohols, oligo ethylene glycols, long chain amines), and thus, the problem of melt sublimination during grafting of maleic anhydride to atactic polypropylene is eliminated.

Another object of the present invention is to prevent the phase separation problem during the grafting of maleic anhydride to atactic polypropylene in order to obtain a coupling agent. In the present invention, the problem of phase separation is eliminated by means of the modification of maleic anhydride. Maleic anhydride monoester or maleic anhydride monoamide is obtained after maleic anhydride is modified with chemicals having different branching, functional groups, and polarities (long chain alcohols, oligo ethylene glycols, long chain amines), and thus, the problem of phase separation observed during the grafting of maleic anhydride to atactic polypropylene is eliminated.

It was aimed to obtain a versatile coupling agent agent that provides compatibility between atactic polypropylene, which has the flexibility to be synthesized by adding functional groups in the required polarity (in hydrophilic/hydrophobic balance), and many additives. In the present invention, increasing the compatibility between atactic polypropylene and various additives is provided by means of the modification of maleic anhydrid. Maleic anhydride monoester or maleic anhydride monoamide that can be functionally diversified, that has hydrophilic and hydrophobic properties, and that has improved physical and chemical properties is obtained, after maleic anhydride is modified with chemicals having different branching, functional groups, and polarities (long chain alcohols, oligo ethylene glycols, long chain amines).

In the present invention, the atactic polypropylene, which is formed as a side product and usually considered as a waste, is transformed in order to obtain the coupling agent, and also it is provided that economic income is obtained from atactic polypropylene, which is a side product.

Another object of the present invention is to minimize the solvent consumption in coupling agent synthesis, and to eliminate the need for an extra process in order to remove the solvents used. The consumption of solvents that are harmful to the environment and human health is prevented by means of grafting maleic anhydride monoester or maleic anhydride monoamide obtained from maleic anhydride to the atactic propylene by using the melt mixing method, and in addition, the necessity of the processes to be performed in order to remove the solvents used is also eliminated.

### Detailed Description of the Invention

The present invention relates to a polyolefin-based coupling agent obtained by means of grafting maleic anhydride monoester or maleic anhydride monoamide, obtained from maleic anhydride to atactic propylene by melt mixing, and a method for producing the polyolefin-based coupling agent. By means of the present invention, maleic anhydride monoester or maleic anhydride monoamide synthesized from maleic anhydride is grafted onto atactic polypropylene, which is a polyolefin derivative, without sublimating in the melt phase, and said material can be used as a compatibilizing agent in emulsions, compounding, masterbatching (plastic raw material additive), and in composite production industries.

A polyolefin-based coupling agent obtained by grafting maleic anhydride monoester to the atactic propylene by melt mixing, which is the subject of the present invention, is shown in formula 1; 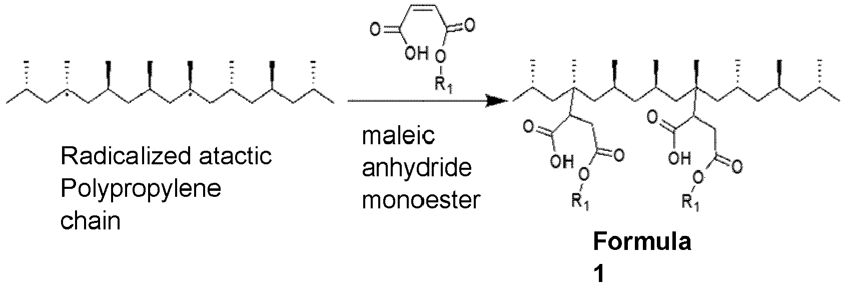
- R₁ :: long hydrocarbon chain, short hydrocarbon chain, branched hydrocarbon, glycol derivatives

A polyolefin-based coupling agent obtained by grafting maleic anhydride monoamide to atactic propylene by melt mixing, which is the subject of the present invention, is shown in formula 2; 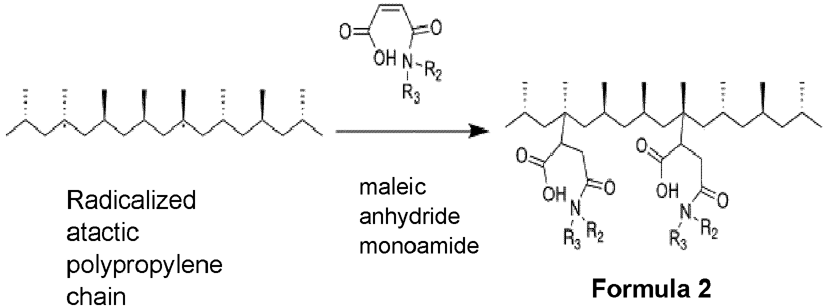
- R₂ :: hydrogen, long hydrocarbon chain, short hydrocarbon chain, branched hydrocarbon chain, amine-terminated polyglycol derivatives, polyethylene imine derivatives
- R₃ :: long hydrocarbon chain, short hydrocarbon chain, branched hydrocarbon, amine-terminated polyglycol derivatives, polyethylene imine derivatives

Before the synthesis of such coupling agents, which is the subject of the present invention, the synthesis of the said maleic anhydride monoester or maleic anhydride monoamide to be grafted onto atactic polypropylene should be performed. Then, the synthesized maleic anhydride monoester or maleic anhydride monoamide is grafted onto atactic polypropylene.

The method for polyolefin-based coupling agent obtained by means of grafting maleic anhydride monoester or maleic anhydride monoamide obtained from maleic anhydride to the atactic propylene by melt mixing comprises the process steps of;
I. reacting 1 mole of maleic anhydride with 1 mole of glycol derivative selected from tetraethylene glycol, pentaethylene glycol, and hexaethylene glycol or 1 mole of long chain alcohol at 50-70°C for 1-3 hours at a ratio of 1 mole according to the reactant used, and obtaining maleic anhydride monoester as a result of the reaction, or reacting 1 mole of maleic anhydride with 1 mole of long-chain amine in toluene at - 20-60°C for 1-60 minutes, and obtaining maleic anhydride monoamides a result of the reaction,
II. adding 80-94% by weight of atactic polypropylene at atmospheric pressure into the completely stirred tank reactor preheated to 160-180°C, and melting atactic polypropylene in the reactor by mixing for 5-15 minutes,
III. adding 0.1-30% of maleic anhydride monoester or maleic anhydride monoamide by weight obtained in the first step, and weighing and adding 1-5% of initiator by weight to the reactor containing the molten atactic polypropylene,
IV. performing the grafting reaction for 1-2 hours by mixing the initiator added into the molten atactic polypropylene with maleic anhydride monoester or maleic anhydride monoamide at 300-500 rpm.

In said method, the atactic polypropylene reacts with the initiator and thus a radical is formed on the polypropylene chain. The formed radical then reacts with maleic anhydride monoester or maleic anhydride monoamide, which completes the radical transfer reaction grafting process.

In another embodiment of the present invention, maleic anhydride monoester or maleic anhydride monoamide is used as 5-15% by weight in the method for producing a polyolefin-based coupling agent.

In the method according to the present invention, long chain alcohol is lauryl alcohol (1-dodecanol), myristyl alcohol (1-tetradecanol), cetyl alcohol (1-hexadecanol), stearyl alcohol (1-octadecanol), nonadecyl alcohol (1-nonadecanol), arachidyl alcohol (1-eicosanol), heptadecyl alcohol (1-heptadecanol), pentadecyl alcohol (1-pentadecanol), tetraethylene glycol, pentaethylene glycol, or hexaethylene glycol.

In the present invention, as the initiator, dicumyl peroxide, di-tertbutyl peroxide, benzoyl peroxide, acetyl peroxide, tertbutyl cumyl peroxide, di-tertamil peroxide or 2,5-dimethyl-3-hexine-2,5-di-tertbutyl peroxide or other initiators with similar characteristics can be used.

In the method according to the present invention, long chain amine is 1-octilamine 1-nonanamine, 1-decylamine, stearamine, setylamine, heptylamine, hexylamine, diisopropyl amine or diisobutyl amine. It is necessary to ensure that the amine used in amine modifications does not undergo Michael Addition reaction. In case the amine used in the amine modifications undergoes Michael addition reaction, the double bond on the maleic anhydride is lost, and thus said maleic anhydride cannot be grafted onto atactic polypropylene.

In the method according to the present invention, no solvent is used during the grafting of maleic anhydride derivatives to atactic polypropylene.

Synthesis of maleic anhydride monoester mentioned in process step I is shown in React. 1; 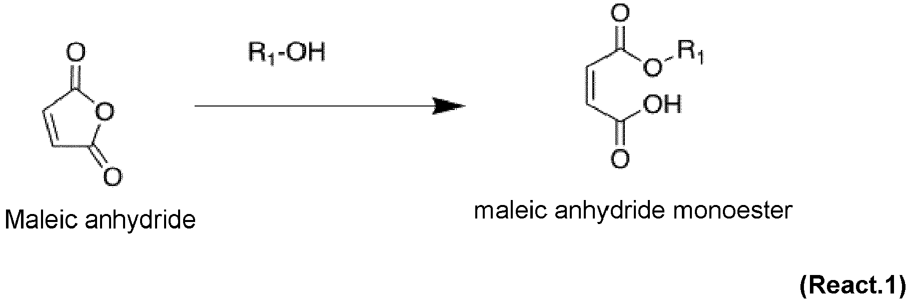
- R₁ :: long hydrocarbon chain, short hydrocarbon chain, branched hydrocarbon, glycol derivatives

Synthesis of maleic anhydride monoamide mentioned in process step I is shown in React.2; 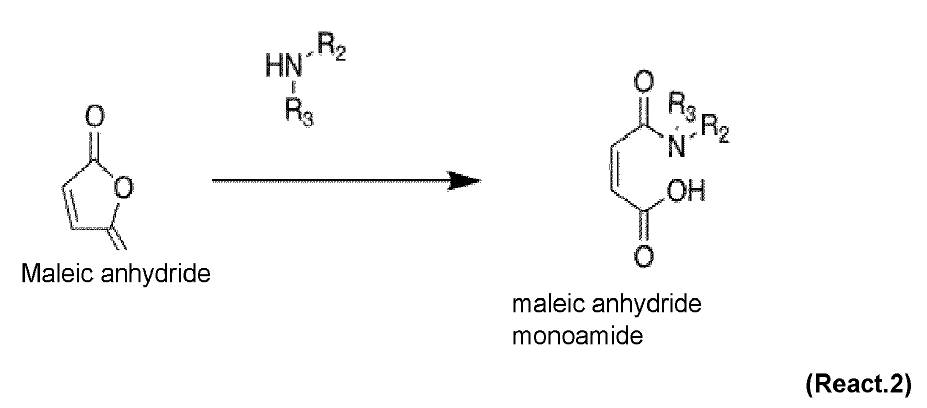
- R₂ :: hydrogen, long hydrocarbon chain, short hydrocarbon chain, branched hydrocarbon chain, amine-terminated polyglycol derivatives, polyethylene imine derivatives
- R₃ :: long hydrocarbon chain, short hydrocarbon chain, branched hydrocarbon, amine-terminated polyglycol derivatives, polyethylene imine derivatives

The radical conversion reaction of atactic polypropylene with initiator is shown in React.3;

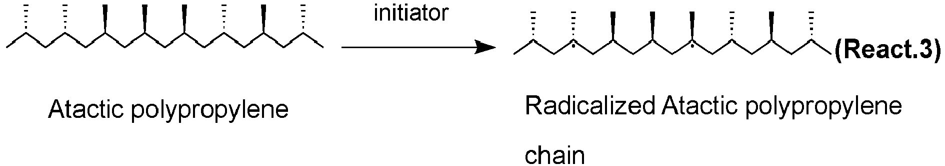

The radical transfer reaction of the atactic polypropylene chain is shown in React.4; 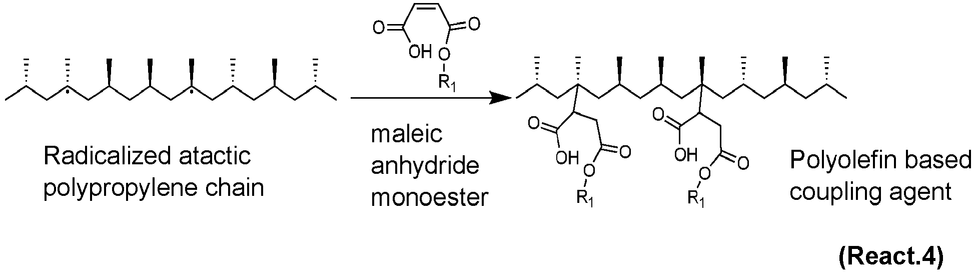
- R₁ :: long hydrocarbon chain, short hydrocarbon chain, branched hydrocarbon, glycol derivatives

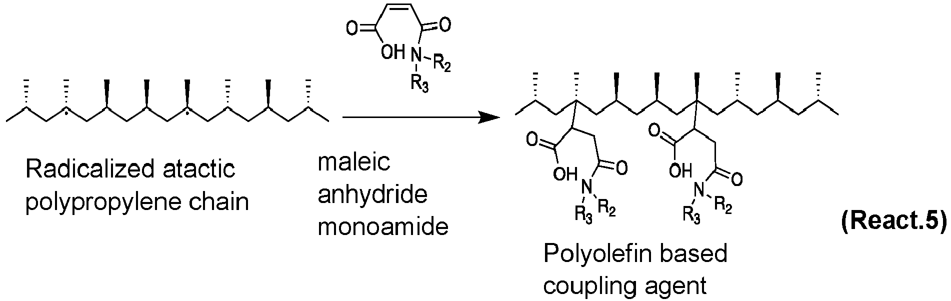

- R₂ :: hydrogen, long hydrocarbon chain, short hydrocarbon chain, branched hydrocarbon chain, amine-terminated polyglycol derivatives, polyethylene imine derivatives
- R₃ :: long hydrocarbon chain, short hydrocarbon chain, branched hydrocarbon, amine-terminated polyglycol derivatives, polyethylene imine derivatives

Since maleic anhydride monoester and maleic anhydride monoamide obtained by modifying maleic anhydride have also a reactive functional group such as carboxylic acid, they increase the coupling compatibility between atactic polypropylene, in which they are grafted, and various additives. In addition, the maleic anhydride monoester and maleic anhydride monoamide derivatives support the interaction of atactic polypropylene with various additives both physically and chemically with the various hydrophobic and hydrophilic properties therof.

The sublimation problem is eliminated by using modified derivatives of maleic anhydride, maleic anhydride monoester or maleic anhydride monoamide, instead of said maleic anhydride that has a low melting temperature and high boiling temperature, and that causes sublimation problems in the grafting process. When trying to graft maleic anhydride onto atactic polypropylene, a phase separation problem arises due to polarity since maleic anhydride and atactic polypropylene cannot mix, and this phase separation problem accentuates the sublimation problem.

Maleic anhydride monoester or maleic anhydride monoamide is obtained after maleic anhydride is modified with chemicals having different branching, functional groups, and polarities (long chain alcohols, oligo ethylene glycols, long chain amines), and thus, the polarity-induced phase separation problem observed during grafting maleic anhydride to atactic polypropylene is eliminated.

The solvent consumption is prevented by means of grafting maleic anhydride monoester or maleic anhydride monoamide obtained from maleic anhydride to the atactic propylene by using the melt mixing method. For this purpose, In both embodiments of the present invention, atactic polypropylene needs to be melted in the reactor before the grafting reaction of modified maleic anhydride to atactic polypropylene starts. The consumption of solvents that are harmful to the environment and human health is prevented by means of using the melt mixing method in said grafting reaction, and in addition, the necessity of the processes to be performed in order to remove the solvents used is also eliminated.

Utilizing atactic polypropylene, which is generally formed as a side-product in industries and still classified as waste in some production areas, as a coupling agent contributes to both transforming and economic income.

## Claims

1. A polyolefin-based coupling agent with the chemical structure indicated by formula 1 or formula 2, **characterized in that**, 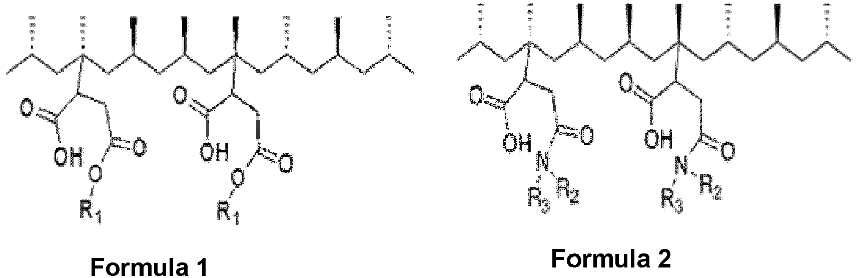 in case of formula 1, R1 is selected from long hydrocarbon chain, short hydrocarbon chain, branched hydrocarbon, and glycol derivatives; in case of formula 2, R2 is selected from hydrogen, long hydrocarbon chain, short hydrocarbon chain, branched hydrocarbon chain, amine-terminated polyglycol derivatives, and polyethylene imine derivatives, and R3 is selected from long hydrocarbon chain, short hydrocarbon chain, branched hydrocarbon, amine terminated polyglycol derivatives, and polyethylene imine derivatives.

2. A coupling agent according to Claim 1, **characterized in that**, it comprises 0.1-30% of maleic anhydride monoester or maleic anhydride monoamide by weight, 1-5% of initiator by weight, and 80-94% of atactic polypropylene by weight.

3. A coupling agent according to Claim 1, **characterized in that**, said long chain alcohol is lauryl alcohol (1-dodecanol), myristyl alcohol (1-tetradecanol), cetyl alcohol (1-hexadecanol), stearyl alcohol (1-octadecanol), nonadecyl alcohol (1-nonadecanol), arachidyl alcohol (1-eicosanol), heptadecyl alcohol (1-heptadecanol), pentadecyl alcohol (1-pentadecanol), tetraethylene glycol, pentaethylene glycol, or hexaethylene glycol.

4. A coupling agent according to Claim 1, **characterized in that**, said initiator is dicumyl peroxide, di-tertbutyl peroxide, benzoyl peroxide, acetyl peroxide, tertbutyl cumyl peroxide, di-tertamil peroxide or 2,5-dimethyl-3-hexine-2,5-di-tertbutylperoxide.

5. A coupling agent according to Claim 1, **characterized in that**, said long chain amine is 1-octilamine 1-nonanamine, 1-decylamine, stearamine, setylamine, heptylamine, hexylamine, diisopropyl amine or diisobutyl amine.

6. A method for producing polyolefin-based coupling agent, **characterized in that**, it comprises the process steps of;
I. reacting 1 mole of maleic anhydride with 1 mole of glycol derivative selected from tetraethylene glycol, pentaethylene glycol, and hexaethylene glycol or 1 mole of long chain alcohol at 50-70°C for 1-3 hours at a ratio of 1 mole according to the reactant used, and obtaining maleic anhydride monoester as a result of the reaction, or reacting 1 mole of maleic anhydride with 1 mole of long-chain amine in a toluene at -20-60°C for 1-60 minutes, and obtaining maleic anhydride monoamides as a result of the reaction,
II. adding 80-94% by weight of atactic polypropylene at atmospheric pressure into the completely stirred tank reactor preheated to 160-180°C, and melting atactic polypropylene in the reactor by mixing for 5-15 minutes,
III. adding 0.1-30% of maleic anhydride monoester or maleic anhydride monoamide by weight obtained in the first step, and weighing and adding 1-5% of initiator by weight to the reactor containing molten atactic polypropylene,
IV. performing the grafting reaction for 1-2 hours by mixing the initiator added into the molten atactic polypropylene with maleic anhydride monoester or maleic anhydride monoamide at 300-500 rpm.

7. A method according to Claim 6, **characterized in that**, it comprises the process steps of; firstly radicalizing by reacting with the atactic polypropylene initiator in the grafting reaction, then, performing radical transfer reaction by reacting with maleic anhydride monoester or maleic anhydride monoamide.

8. A method according to Claim 6, **characterized in that**, said long chain alcohol is lauryl alcohol (1-dodecanol), myristyl alcohol, cetyl alcohol (1-hexadecanol), stearyl alcohol (1-octadecanol), nonadecyl alcohol (1-nonadecanol), arachidyl alcohol (1-eicosanol), heptadecyl alcohol (1-heptadecanol), pentadecyl alcohol (1-pentadecanol), tetraethylene glycol, pentaethylene glycol, or hexaethylene glycol.

9. A method according to Claim 6, **characterized in that**, said initiator is dicumyl peroxide, di-tertbutyl peroxide, benzoyl peroxide, acetyl peroxide, tertbutyl cumyl peroxide, di-tertamil peroxide or 2,5-dimethyl-3-hexine-2,5-di-tertbutyl peroxide.

10. A method according to Claim 6, **characterized in that**, said long chain amine is 1-octilamine 1-nonanamine, 1-decylamine, stearamine, setylamine, heptylamine, hexylamine, diisopropyl amine or diisobutyl amine.
